# DEMANDE DE BREVET EUROPEEN

(11) **EP 0 730 173 A1**
(43) Date de publication de la demande: **04.09.1996**
(21) Numéro de dépôt: 96400443.6
(22) Date de dépôt: 01.03.1996
(51) Int. Cl.: G02B 6/293

(54) **Multiplexeur optique à insertion-extraction à haute isolation**

(30) Priorité: 03.03.1995 FR 9502487
(71) Demandeur: FRANCE TELECOM, 75015 Paris (FR)
(72) Inventeur: Hamel, André, 22300 Lannion (FR); Laville, Daniel, 22700 Perros Guirec (FR); Delevaque, Eric, 22300 Ploumilliau (FR)
(74) Mandataire: Dubois-Chabert, Guy

(57) **Abrégé**

Selon l'invention, un premier filtre multidiélectrique passe-bande (F1) reçoit des signaux optiques, transmet au moins l'un de ceux-ci et réfléchit les signaux non transmis. Un moyen d'insertion (F2) insère parmi ceux-ci au moins un autre signal optique. Un filtre à réseau de Bragg photo-inscrit (R) reçoit les signaux réfléchis par le premier filtre et transmet ceux-ci au moyen d'insertion et réfléchit tout signal optique de même longueur d'onde que le signal transmis par le premier filtre et susceptible de subsister parmi les signaux réfléchis par celui-ci. Application aux télécommunications optiques.

## Description

### DOMAINE TECHNIQUE

La présente invention concerne un multiplexeur optique à insertion-extraction (" *Optical add-drop multiplexer* ").

Elle s'applique notamment au domaine des télécommunications optiques.

### ETAT DE LA TECHNIQUE ANTERIEURE

Avec l'introduction de la Hiérarchie Numérique Synchrone, les architectures de transmission en anneau présentent un intérêt économique et une meilleure fiabilité.

Il a été proposé d'appliquer les techniques de multiplexage optique à ces architectures de transmission en anneau.

De telles applications sont connues par les documents (1) et (2) qui, comme les autres documents cités par la suite, sont mentionnés à la fin de la présente description.

On connaît par exemple les boucles de transmission unidirectionnelle dans lesquelles plusieurs stations sont placées les unes à la suite des autres et comprennent chacune un multiplexeur optique à insertion-extraction.

Les informations destinées à une station déterminée sont transportées par un signal optique de longueur d'onde déterminée λ et parviennent au multiplexeur optique de cette station.

Un multiplexeur optique à insertion-extraction est ainsi un composant-clé des applications mentionnées plus haut.

Si le signal de longueur d'onde λ est extrait en quasi-totalité par ce multiplexeur, c'est-à-dire si le signal résiduel de longueur d'onde λ dans la boucle, après extraction, est suffisamment faible, les informations de retour émises par le multiplexeur vers la station centrale que comprend la boucle peuvent utiliser la même longueur d'onde λ.

Dans un tel cas de réutilisation de longueur d'onde, un réseau en anneau ayant N stations, où N est un nombre entier supérieur à 1, nécessite N longueurs d'onde.

Plusieurs technologies optiques sont adaptées à la réalisation d'un multiplexeur optique à insertion-extraction.

A ce sujet, on consultera le document (3) où la conception d'un tel multiplexeur est fondée sur l'utilisation d'un filtre optique accordable par effet acousto-optique.

Un tel composant en est au stade d'un produit de laboratoire et il est actuellement réalisé par les techniques de l'optique intégrée sur du niobate de lithium.

Les pertes d'insertion de ce composant indépendant de la polarisation sont de l'ordre de 5 à 8 dB.

Le niveau de réjection de la longueur d'onde extraire est de l'ordre de 15 à 18 dB.

On consultera également le document (4) qui décrit des multiplexeurs optiques à insertion-extraction qui sont réalisés à partir de réseaux de diffraction (" *diffraction gratings ")* montés dos-à-dos.

Dans un tel cas, toutes les longueurs d'onde traversent deux réseaux de diffraction montés dos-à-dos et les pertes d'insertion sont de l'ordre de 6 dB.

On notera qu'il existe alors une contrainte supplémentaire, à savoir la nécessité d'avoir des réseaux de diffraction appariés afin que leurs fonctions de filtrage en peigne soient bien superposées.

On connaît également, par le document (5), des réseaux de guides (" *grating arrays ")* qui sont réalisés en optique intégrée sur du silicium ou sur InP.

Ils peuvent être configurés pour réaliser la fonction d'insertion-extraction.

La perte d'insertion se situe alors entre 5 et 8 dB par voie.

On se reportera également au document (6) qui décrit une autre solution pour réaliser un multiplexeur optique à insertion-extraction.

Cet autre multiplexeur connu comprend deux filtres multidiélectriques passe-bande.

Pour de tels filtres, la courbe représentative de la fonction de transfert passe-bande en transmission a une largeur à mi-hauteur comprise entre 0,5 nm et 10 nm par exemple.

La caractéristique de transmission est utilisée pour l'extraction d'une longueur d'onde déterminée λ tandis que la caractéristique de réflexion est utilisée pour aiguiller toutes les longueurs d'onde en transit vers la sortie du multiplexeur.

Plus précisément, l'un des deux filtres reçoit des signaux de différentes longueurs d'onde et réfléchit tous ces signaux sauf celui qui a la longueur d'onde λ sur laquelle est centré ce premier filtre.

Les signaux réfléchis arrivent à l'autre filtre et sont également réfléchis par celui-ci vers la sortie du multiplexeur.

Cet autre filtre transmet aussi vers cette sortie un signal à insérer ayant la même longueur d'onde λ que le signal extrait grâce au premier filtre.

Le niveau de transmission d'un filtre multidiélectrique passe-bande vaut environ 90%.

Si l'absorption est négligeable, environ 10% de la puissance (relative à la longueur d'onde λ) est réfléchie et se superpose aux autres longueurs d'onde présentes sur la ligne de transmission optique dans laquelle se trouve le multiplexeur.

Ainsi, l'extraction d'un signal de longueur d'onde λ avec le premier des deux filtres est imparfaite.

De ce fait, un signal parasite de même longueur d'onde λ est susceptible de se superposer au signal qui a cette longueur d'onde λ et qui est inséré grâce au deuxième filtre.

### EXPOSE DE L'INVENTION

La présente invention a pour but de remédier à cet inconvénient au moyen d'un filtre à réseau de Bragg photo-inscrit (" *photo-induced Bragg grating filter ").*

Un tel filtre à réseau de Bragg présente une fonction de transfert passe-bande en réflexion.

Un filtre à réseau de Bragg photo-inscrit est formé sur un guide optique, par exemple une fibre optique ou un guide planaire (par exemple en silicium, en InP ou en niobate de lithium).

Au sujet de tels filtres à réseau de Bragg photo-inscrit, on se reportera aux documents (7) et (8).

La présente invention propose d'insérer entre les deux filtres multidiélectriques mentionnés plus haut un filtre à réseau de Bragg photo-inscrit qui va bloquer la longueur d'onde λ subsistant en réflexion.

On obtient ainsi un composant (filtre multidiélectrique associé au filtre à réseau de Bragg photo-inscrit) à haut niveau de réjection sur un domaine spectral plus étendu que ce qu'on obtient avec un filtre multidiélectrique seul.

De façon précise, la présente invention a pour objet un multiplexeur optique à insertion-extraction comprenant :
- un premier filtre multidiélectrique passe-bande qui est destiné à recevoir un premier ensemble de signaux optiques et qui est apte à transmettre au moins l'un de ces signaux et à réfléchir les signaux non transmis de l'ensemble, et
- un moyen d'insertion optique qui est destiné à recevoir les signaux ainsi réfléchis et au moins un signal optique à insérer parmi ceux-ci et qui est apte à fournir un deuxième ensemble de signaux optiques comprenant les signaux réfléchis et le signal à insérer,
ce multiplexeur étant caractérisé en ce qu'il comprend en outre un filtre à réseau de Bragg photo-inscrit qui est optiquement couplé, d'un côté, au premier filtre multidiélectrique pour recevoir les signaux réfléchis par ce premier filtre et, de l'autre côté, au moyen d'insertion et qui est apte à transmettre ces signaux réfléchis à ce moyen d'insertion et à réfléchir vers le premier filtre un ou des signaux optiques qui a ou ont la ou les mêmes longueurs d'onde que le ou les signaux transmis par ce premier filtre et qui est ou sont susceptibles de subsister parmi les signaux réfléchis par ce premier filtre.

Selon un premier mode de réalisation particulier du multiplexeur optique objet de la présente invention, le moyen d'insertion optique comprend un coupleur optique de type 2 vers 1, ayant une première entrée qui reçoit les signaux transmis par le filtre à réseau de Bragg photo-inscrit, une deuxième entrée qui reçoit le signal optique à insérer et une sortie qui fournit le deuxième ensemble de signaux.

Selon un deuxième mode de réalisation particulier, le moyen d'insertion optique comprend un deuxième filtre multidiélectrique passe-bande qui reçoit les signaux transmis par le filtre à réseau de Bragg photo-inscrit et le signal optique à insérer et qui est apte à transmettre, vers la sortie de ce deuxième filtre, ce signal optique à insérer et également à réfléchir, vers cette sortie, ces signaux transmis par ce filtre à réseau de Bragg photo-inscrit.

Dans le cas de l'utilisation de ce deuxième filtre multidiélectrique, on peut utiliser des premier et deuxièmes filtres multidiélectriques qui sont centrés sur la même longueur d'onde.

Ces premier et deuxième filtre multidiélectriques peuvent avoir en outre la même bande passante.

Dans le cas de l'utilisation du deuxième filtre multidiélectrique, les premier et deuxième filtres multidiélectriques peuvent, au contraire, être centrés sur des longueurs d'onde différentes l'une de l'autre.

Selon un mode de réalisation préféré, permettant d'améliorer la sélectivité du multiplexeur objet de l'invention en ce qui concerne l'extraction, ce multiplexeur comprend en outre au moins un filtre à réseau de Bragg photo-inscrit supplémentaire qui est optiquement couplé au premier filtre optique de manière à transmettre le ou les signaux transmis par celui-ci et qui est apte à réfléchir, vers ce premier filtre, l'un desdits signaux non transmis de l'ensemble qui est susceptible de subsister parmi le ou les signaux transmis par ce premier filtre.

### BREVE DESCRIPTION DES DESSINS

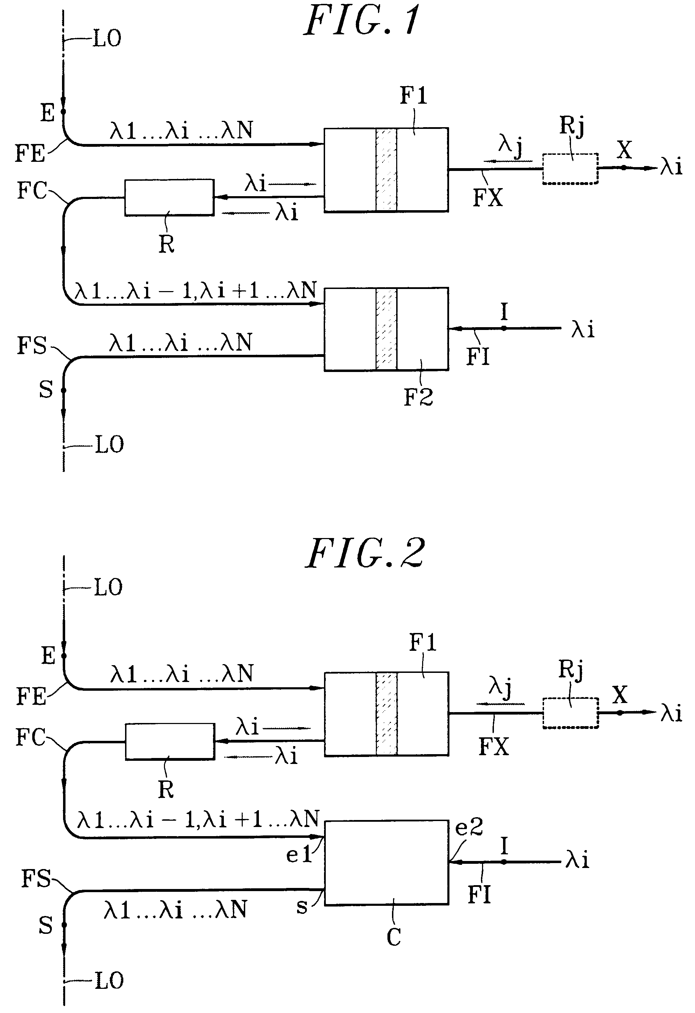

La présente invention sera mieux comprise à la lecture de la description d'exemples de réalisation donnés ci-après, à titre purement indicatif et nullement limitatif, en faisant référence aux dessins annexés sur lesquels :
◆ la figure 1 est une vue schématique d'un premier mode de réalisation particulier du multiplexeur optique à insertion-extraction objet de la présente invention, et
◆ la figure 2 est une vue schématique d'un deuxième mode de réalisation particulier de ce multiplexeur.

### EXPOSE DETAILLE DE MODES DE REALISATION PARTICULIERS

Le multiplexeur optique à insertion-extraction conforme à l'invention, qui est schématiquement représenté sur la figure 1, est destiné à insérer dans un ensemble de signaux optiques et à extraire de cet ensemble de signaux des signaux optiques ayant des longueurs d'onde déterminées.

Les longueurs d'onde des signaux optiques considérés appartiennent à un ensemble de longueurs d'onde λ1 ... λi ... λN, où N est un nombre entier supérieur à 1.

On cherche par exemple à insérer et/ou extraire un signal dont la longueur d'onde est choisie dans l'ensemble de longueurs d'onde λ1 ... λN et vaut par exemple λi, où 1≤i≤N.

Le multiplexeur représenté sur la figure 1 est inséré dans une ligne de transmission optique LO formant par exemple une boucle optique dans laquelle on trouve d'autres multiplexeurs optiques non représentés, identiques à celui de la figure 1 et situés en amont et aval de celui-ci sur la ligne optique LO.

Cette ligne est parcourue par les signaux de longueurs d'onde λ1 ... λi ... λN.

Le multiplexeur optique à insertion-extraction conforme à l'invention, qui est schématiquement représenté sur la figure 1, comprend un premier filtre multidiélectrique passe-bande F1 et un deuxième filtre multidiélectrique passe-bande F2.

Le premier filtre F1 est optiquement couplé, par une fibre optique FE, à la ligne optique LO pour recevoir les signaux λ1 ... λN qui se propagent dans cette ligne.

La fibre FE est connectée à la ligne LO en un point E constituant l'entrée du multiplexeur.

Le filtre F1 est centré sur la longueur d'onde λi que l'on veut extraire et transmet le signal incident de longueur d'onde λi (signal à extraire).

A sa sortie du filtre F1, ce signal ainsi transmis passe dans une fibre optique FX qui est optiquement couplée, en un point X (sortie d'extraction du multiplexeur), à des moyens non représentés de traitement du signal extrait.

Les autres signaux incidents, de longueurs d'onde λ1 ... λi-1, λi+1 ... λN, sont réfléchis par le filtre F1 et envoyés, par l'intermédiaire d'une fibre optique FC, au deuxième filtre F2.

Ce deuxième filtre F2 a les mêmes caractéristiques spectrales que le filtre F1.

On entend par là que le filtre F2 est centré sur la même longueur d'onde λi que le filtre F1 et a la même bande passante que ce dernier.

Ce filtre F2 réfléchit ainsi les signaux incidents de longueurs d'onde λ1 ... λi-1, λi+1 ... λN.

Ces signaux réfléchis par le filtre F2 sont transmis à la ligne optique de transmission LO par l'intermédiaire d'une fibre optique FS.

Cette fibre FS est connectée à la ligne optique LO en un point S (sortie du multiplexeur).

Le filtre F2 est connecté, d'un côté, aux fibres FC et FS et, de l'autre côté, à une fibre optique FI.

Dans cette fibre FI se propage un signal optique de longueur d'onde λi que l'on veut insérer parmi les autres signaux.

Ce signal de longueur d'onde λi provient de moyens de génération non représentés qui sont connectés à la fibre FI en un point I (entrée d'insertion du multiplexeur).

Le signal à insérer, de longueur d'onde λi, est transmis par le filtre F2 et se trouve inséré parmi les autres signaux dans la fibre FS et passe avec ceux-ci dans la ligne LO.

A titre purement indicatif et nullement limitatif, les fibres FE, FX, FC, FI et FS ont un coeur de 10 µm de diamètre et une gaine optique de 125 µm de diamètre.

Une telle structure d'insertion-extraction utilisant les filtres F1 et F2 est déjà connue et présente des inconvénients comme on va le voir.

A titre d'exemple, on utilise des filtres multidiélectriques F1 et F2 qui sont tous les deux centrés sur une longueur d'onde λi de 1540 nm et qui sont utilisables en transmission dans le domaine 1540± 2 nm (dont la largeur vaut 4 nm).

De plus, ces filtres sont tels que, pour un décalage de ±2 nm à partir de 1540 nm, les pertes d'insertion augmentent de 0,5 dB mais le taux de réjection se dégrade de 4 dB et tombe à une valeur de 11 dB qui est insuffisante pour la réutilisation de la longueur d'onde λi (1540 nm) dans une transmission par fibre optique.

Cette dégradation impose des contraintes de réalisation du filtre multidiélectrique F1 plus sévères (en vue d'obtenir un coefficient de transmission plus élevé) et des contraintes sur le centrage des longueurs d'onde d'émission des sources lumineuses associées à la ligne optique LO.

Pour remédier à ces inconvénients, le multiplexeur de la figure 1 comprend en outre, conformément à l'invention, un filtre à réseau de Bragg photo-inscrit R pour augmenter la valeur du taux de réjection.

Ce filtre R est formé sur la fibre FC.

Le filtre R transmet vers le filtre F2 les signaux de longueurs d'onde λ1 ... λi-1, λi+1 ... λN provenant du filtre F1 et réfléchit au contraire tout signal optique de longueur d'onde λi subsistant parmi ces signaux qui proviennent du filtre F1.

Le filtre R est centré sur la même longueur d'onde que le filtre F1, à savoir λi, et a la même bande passante (en réflexion) que ce filtre F1.

On précise que le réseau de Bragg du filtre R est inscrit dans le coeur de la fibre optique FC qui peut être une fibre standard pour télécommunications G652.

A titre d'exemple, cette fibre est placée, préalablement à l'inscription du réseau, dans une atmosphère d'hydrogène moléculaire à une pression d'environ 200x10⁵ Pa pendant 15 jours afin d'accroître sa photosensitivité.

La technique d'inscription utilisée est de type holographique transverse et met en oeuvre un laser à argon dont la fréquence est doublée dans sa cavité et qui émet un rayonnement ultraviolet continu de longueur d'onde 244 nm.

On peut par exemple réaliser avec cette technique des filtres à réseau de Bragg photo-inscrit centrés sur 1540 nm et présentant un pic de réflexion dont la largeur à mi-hauteur peut être comprise entre environ 0,1 nm et environ 5 nm avec une réflectivité supérieure à 99%.

L'ajout d'un filtre à réseau de Bragg photo-inscrit R centré sur 1540 nm et présentant un pic de réflexion dont la largeur à mi-hauteur vaut 4 nm permet d'augmenter le taux de réjection de 20 dB sur le domaine 1540±2 nm.

Le taux de réjection de l'ensemble constitué par le filtre F1 et le filtre R est alors de 30 dB dans le domaine spectral utile 1540±2 nm (bande passante à 0,5 dB en transmission).

Une telle valeur de 30 dB permet la réutilisation des longueurs d'onde dans la bande passante en transmission d'un filtre multidiélectrique, dans un réseau à fibre optique *("Optical fiber* network") de type "transmission point à point" ou de type "anneau", avec peu de contraintes sur l'affectation spectrale des sources lumineuses associées au réseau.

Dans une variante de réalisation non représentée, le filtre F1 et/ou le filtre F2 ont des bandes passantes suffisamment larges pour pouvoir insérer et/ou extraire plus d'un signal optique.

Dans ce cas, en ce qui concerne le filtre F1, on lui associe bien entendu un filtre à réseaux de Bragg photo-inscrit R adapté, permettant de transmettre les signaux qui ne sont pas extraits et de réfléchir vers le filtre F1 les signaux ayant les longueurs d'onde de ceux qui sont extraits.

Ce filtre adapté est composé de filtres à réseaux de Bragg photo-inscrits élémentaires en série, respectivement centrés sur les longueurs d'onde à réfléchir vers le filtre F1.

On pourrait également réaliser un multiplexeur conforme à l'invention dans lequel les filtres F1 et F2 seraient encore centrés sur la même longueur d'onde mais auraient des bandes passantes différentes l'une de l'autre.

Dans une autre variante non représentée, les filtres F1 et F2 sont centrés sur des longueurs d'onde différentes l'une de l'autre afin de pouvoir extraire de la ligne optique un signal ayant la longueur d'onde sur laquelle le filtre F1 est centré et insérer dans cette ligne optique un signal ayant la longueur d'onde sur laquelle le filtre F2 est centré.

Un autre multiplexeur conforme à l'invention est schématiquement représenté sur la figure 2.

Ce multiplexeur de la figure 2 diffère simplement de celui de la figure 1 par le fait que le filtre F2 y est remplacé par un coupleur optique C de type 2 vers 1.

Ce coupleur optique a deux entrée e1 et e2 et une sortie s.

L'entrée e1 est couplée à la fibre FC pour recevoir les signaux de longueurs d'onde λ1 ... λi-1, λ i+1 ... λN qui sont transmis par le filtre R.

L'entrée e2 est couplée à la fibre FI pour recevoir le signal à insérer de longueur d'onde λi.

La sortie s est couplée à la fibre FS pour transmettre à celle-ci les signaux de longueurs d'onde λ1 ... λi-1, λi+1 ... λN et le signal inséré, de longueur d'onde λi, qui leur a été mélangé grâce au coupleur.

Pour améliorer la sélectivité des multiplexeurs des figures 1 et 2, on peut insérer au moins un filtre à réseau de Bragg photo-inscrit Rj sur la fibre FX, ce filtre Rj étant centré sur une longueur d'onde λj appartenant à l'ensemble de longueurs d'onde λ1 ... λN, avec λj≠λi.

Ceci permet de réduire le niveau du signal de longueur d'onde λj (susceptible de subsister malgré le filtre F1) à la sortie X où est installé un récepteur optique du signal de longueur d'onde λi.

Un tel filtre Rj est particulièrement intéressant si le signal de longueur d'onde λj est à un fort niveau (par exemple 0dBm) au point E de la fibre d'entrée FE tandis que les autres signaux sont à un niveau plus faible (par exemple -30 dBm). Le filtre F1 va ramener le niveau du signal de longueur d'onde λj à environ -30 dBm au point X grâce à sa caractéristique d'isolation qui laisse passer essentiellement le signal de longueur d'onde λi. Mais, pour assurer une bonne réception du signal de longueur d'onde λi après le point X, il faut que le niveau du signal de longueur d'onde λj soit situé environ 25 dB en dessous du niveau du signal utile de longueur d'onde λi ; cet affaiblissement supplémentaire est opportunément obtenu par un filtre à réseau de Bragg photo-inscrit qui est centré sur la longueur d'onde λj et qui apporte une atténuation de 25 dB.

Au lieu du filtre Rj, on peut insérer, sur la fibre FX, une pluralité de filtres à réseau de Bragg photo-inscrits placés en série et respectivement centrés sur des longueurs d'onde distinctes les unes des autres et distinctes de celle(s) que l'on souhaite transmettre à travers le filtre F1.

Les documents cités dans la présente description sont les suivants :
(1) " Multiwavelength survivable ring network architectures " ; A.F. ELREFAIE ; Bellcore ICC 93
(2) " A fully transparent fiber optic ring architecture for WDM Networks " M.I. IRSHID, M. KAVEHRAD ; Journal of Ligthwave Technology vol.10, n°1, janvier 92
(3) J.E. Baran et al., " Multiwavelength performance of an apodized acousto-optic switch ", OFC '94, TuM5
(4) A.F. Elrefaie et al., " Fibre amplifiers in closed ring WDM networks ", Electron. Lett., vol.28, pp 2340-2341, 1992
(5) Y. Tachiwaka et al., " Arrayed-waveguide grating add-drop multiplexer with loop-back optical paths ", Electronics Letters Vol.29 n°24, pp 2133-2134
(6) A. Hamel, V. Tholey, M.J. Chawki, " WDM-SDH Networks : an alternative to SDH rings ", EFOC & N94 ; p.98-101
(7) F. Bilodeau et al., " Compact all fiber narrowband transmission filter using Bragg gratings ", ECOC 93, pp 29-32
(8) S. LEGOUBIN, M. DOUAY, P. BERNAGE, P. NIAY, J.F. BAYON, T. GEORGES ; Inscription de réseaux photoréfractifs dans des fibres dopées à l'oxyde de germanium, Journées optique guidée 1993, pp 175-176.

## Revendications

1. Multiplexeur optique à insertion-extraction comprenant :
• un premier filtre multidiélectrique passe-bande (F1) qui est destiné à recevoir un premier ensemble de signaux optiques et qui est apte à transmettre au moins l'un de ces signaux et à réfléchir les signaux non transmis de l'ensemble, et
• un moyen d'insertion optique (F2, C) qui est destiné à recevoir les signaux ainsi réfléchis et au moins un signal optique à insérer parmi ceux-ci et qui est apte à fournir un deuxième ensemble de signaux optiques comprenant les signaux réfléchis et le signal à insérer,
ce multiplexeur étant caractérisé en ce qu'il comprend en outre un filtre à réseau de Bragg photo-inscrit (R) qui est optiquement couplé, d'un côté, au premier filtre multidiélectrique (F1) pour recevoir les signaux réfléchis par ce premier filtre et, de l'autre côté, au moyen d'insertion (F2, C) et qui est apte à transmettre ces signaux réfléchis à ce moyen d'insertion et à réfléchir vers le premier filtre un ou des signaux optiques qui a ou ont la ou les mêmes longueurs d'onde que le ou les signaux transmis par ce premier filtre et qui est ou sont susceptibles de subsister parmi les signaux réfléchis par ce premier filtre.

2. Multiplexeur selon la revendication 1, caractérisé en ce que le moyen d'insertion optique comprend un coupleur optique (C) de type 2 vers 1, ayant une première entrée qui reçoit les signaux transmis par le filtre à réseau de Bragg photo-inscrit (R), une deuxième entrée qui reçoit le signal optique à insérer et une sortie qui fournit le deuxième ensemble de signaux.

3. Multiplexeur selon la revendication 1, caractérisé en ce que le moyen d'insertion optique comprend un deuxième filtre multidiélectrique passe-bande (F2) qui reçoit les signaux transmis par le filtre à réseau de Bragg photo-inscrit (R) et le signal optique à insérer et qui est apte à transmettre, vers la sortie de ce deuxième filtre, ce signal optique à insérer et également à réfléchir, vers cette sortie, ces signaux transmis par ce filtre à réseau de Bragg photo-inscrit.

4. Multiplexeur selon la revendication 3, caractérisé en ce que le premier filtre multidiélectrique (F1) et le deuxième filtre multidiélectrique (F2) sont centrés sur la même longueur d'onde.

5. Multiplexeur selon la revendication 4, caractérisé en ce que le premier filtre multidiélectrique (F1) et le deuxième filtre multidiélectrique (F2) ont en outre la même bande passante.

6. Multiplexeur selon la revendication 3, caractérisé en ce que le premier filtre multidiélectrique (F1) et le deuxième filtre multidiélectrique (F2) sont centrés sur des longueurs d'onde différentes l'une de l'autre.

7. Multiplexeur selon l'une quelconque des revendications 1 à 6, caractérisé en ce qu'il comprend en outre au moins un filtre à réseau de Bragg photo-inscrit supplémentaire (Rj) qui est optiquement couplé au premier filtre optique (F1) de manière à transmettre le ou les signaux transmis par celui-ci et qui est apte à réfléchir, vers ce premier filtre, l'un desdits signaux non transmis de l'ensemble qui est susceptible de subsister parmi le ou les signaux transmis par ce premier filtre.
